# EUROPEAN PATENT SPECIFICATION

(11) **EP 3 402 274 B1**
(45) Date of publication and mention of the grant of the patent: **09.08.2023**
(21) Application number: 17735836.3
(22) Date of filing: 05.01.2017
(51) Int. Cl.: H04W 72/04, H04L 5/00

(54) **UPLINK TRANSMISSION SUB-CARRIER BANDWIDTH INDICATION METHOD AND SELECTION METHOD, BASE STATION, AND USER EQUIPMENT**
ANZEIGEVERFAHREN FÜR SUBTRÄGERBANDBREITE EINER UPLINK-ÜBERTRAGUNG UND AUSWAHLVERFAHREN, BASISSTATION UND BENUTZERGERÄT
PROCÉDÉ D'INDICATION DE BANDE PASSANTE DE SOUS-PORTEUSE DE TRANSMISSION EN LIAISON MONTANTE ET PROCÉDÉ DE SÉLECTION, STATION DE BASE ET ÉQUIPEMENT UTILISATEUR

(30) Priority: 08.01.2016 CN 201610012071
(43) Date of publication of application: 14.11.2018
(73) Proprietor: Sharp Kabushiki Kaisha, Sakai City, Osaka 590-8522 (JP)
(72) Inventor: ZHANG, Meng, Shanghai 201206 (CN); LIU, Renmao, Shanghai 201206 (CN); CHANG, Ningjuan, Shanghai 201206 (CN)
(74) Representative: Müller Hoffmann & Partner
(86) International application number: PCT/CN2017/070268
(87) International publication number: WO 2017/118398

(56) References cited:
- WO-A1-2011/088465
- CN-A- 102 958 133
- CN-A- 104 244 420
- MEDIATEK INC: "NB-IoT Uplink Consideration", 3GPP DRAFT; R1-156974 NB-IOT UPLINK CONSIDERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 24 November 2015 (2015-11-24), XP051022842, Retrieved from the Internet: URL:http://www.3gpp.org/ftp/tsg_ran/WG1_RL 1/TSGR1_83/Docs/ [retrieved on 2015-11-24]
- ETRI: "Considerations on random access design", 3GPP DRAFT; R1-157544 CONSIDERATIONS ON RANDOM ACCESS DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151116 - 20151120 17 November 2015 (2015-11-17), XP051039316, Retrieved from the Internet: URL:http://www.3gpp.org/ftp/Meetings_3GPP_ SYNC/RAN1/01_New_docs_Mon/ [retrieved on 2015-11-17]

## Description

### Technical Field

The present invention relates to the technical field of wireless communication. More specifically, the present invention relates to a method of indicating and a method of selecting a subcarrier bandwidth for uplink transmission, and a base station and a user equipment respectively executing the above methods.

### Background

With the rapid growth of mobile communication and great progress of technology, the world will move towards a fully interconnected network society where anyone or any device can acquire information and share data anytime and anywhere. It is estimated that there will be 50 billion interconnected equipments by 2020, of which only about 10 billion may be mobile phones and tablet computers. The rest are not machines communicating with human beings but machines communicating with one another. Therefore, how to design a system to better support the Internet of Everything is a subject needing further and intensive study.

In the standard of Long Term Evolution (LTE) of the Third Generation Partnership Project (3GPP), machine-to-machine communication is called machine type communication (MTC). MTC is a data communication service that does not require human participation. Deployment of large-scale MTC user equipments (UE) can be used in fields such as security, tracking, billing, measurement and consumer electronics; and the specific applications of large-scale MTC user equipments include video monitoring, supply chain tracking, intelligent meter reading, remote monitoring, etc. MTC requires lower power consumption and supports lower data transmission rate and lower mobility. The current LTE system is mainly for man-to-man communication services. The key to achieving the competitive scale advantages and application prospects of MTC services is that the LTE network supports low-cost MTC equipments.

In addition, some MTC user equipments need to be installed in the basement of a residential building or at a position within the protection of an insulating foil, a metal window, or a thick wall of a traditional building; MTC suffers from more serious and obvious penetration losses from air interfaces, compared to that of conventional equipment terminals (such as mobile phones and tablet computers) in LTE networks. 3GPP decides to study the project design and performance evaluation of MTC equipments with enhanced additional 20 dB coverage. It should be noted that MTC equipments located at poor network coverage areas have the following characteristics: extremely slow data transmission rates, extremely low latency requirements, and limited mobility. In view of the above characteristics of MTC, the LTE network can further optimize some signaling and/or channels to better support MTC services.

Therefore, at the 3GPP RAN #64 plenary session held in June 2014, a new MTC work item with low complexity and enhanced coverage for Rel-13 was proposed (see non-patent literature: RP-140990 New work Item on Even Lower Complexity and Enhanced Coverage LTE UE for MTC, Ericsson, NSN). In the description of this work item, an LTE Rel-13 system needs to support uplink/downlink 1.4 MHz RF bandwidth for an MTC user equipment to operate at any system bandwidth (for example, 1.4 MHz, 3 MHz, 5 MHz, 10 MHz, 15 MHz, or 20 MHz). The standardization of the work item would be completed at the end of 2015.

In addition, in order to better implement the Internet of Everything, another new work item was proposed at the 3GPP RAN # 69 general meeting held in September of 2015 (see Non-Patent Document: RP-151621 New Work Item: NarrowBand loT (NB-IoT)), which is referred to as Narrowband Internet of Things (NB-IoT). In the description of this item, an NB-IoT user equipment (UE) would support 180 kHz RF bandwidth for uplink and downlink. It is determined at the 3GPP RAN1#83 meeting held in November of 2015 that uplink transmission of NB-IoT supports three transmission modes including single-tone 3.75 kHz, single-tone 15 kHz, and multi-tone 15 kHz. However, no solutions are found at present for solving the problem of how to select the three transmission modes for an NB-IoT physical uplink control channel (NB-PUCCH) and an NB-IoT physical uplink shared channel (NB-PUSCH).

The document "NB-IoT Uplink Consideration" by MediaTek Inc., 3GPP draft R1-156974, presents considerations on NB-IOT uplink design.

The document "Considerations on random access design" by ETRI, 3GPP draft R1-157544, discusses on random access design depending on different coverage enhancement target in NB-IoT. In particular, M-PRACH resource configuration and the effects of different subcarrier spacing on M-PRACH preamble format for NB-IoT are discussed. In this contribution, M-PRACH corresponds to PRACH for NB-IoT.

### Summary of Invention

The invention is defined by the appended claims. The first embodiment below falls under the scope of the claims. The second, third, fourth and fifth embodiments below do not fall under the scope of the claims and are to be understood as examples useful for understanding the invention.

In view of the above, the present disclosure provides a solution to solve the problem of indicating configuration of a subcarrier bandwidth (subcarrier spacing) for a single-tone transmission in a first NB-PUSCH after NB-IoT physical random access channel (NB-PRACH) transmission, and also solves the problem of indicating configuration of a subcarrier bandwidth for a single-tone transmission in a second NB-PUSCH after NB-PRACH transmission. Moreover, the present disclosure further relates to the solutions for other problems of indicating configuration of a subcarrier bandwidth for single-tone transmission in NB-PUSCH and NB-PUCCH.

According to one aspect of the present disclosure, a method of indicating a subcarrier bandwidth for uplink transmission indication executed by a base station, the method comprising: generating indication information, the indication information being used to indicate a subcarrier bandwidth for single-tone transmission in a first Narrowband Internet of Thing physical uplink shared channel (NB-PUSCH) and/or a second NB-PUSCH after Narrowband Internet of Thing physical random access channel (NB-PRACH) transmission; and sending to a user equipment (UE) the generated indication information to indicate to the UE a subcarrier bandwidth for the single-tone transmission.

According to another aspect of the present disclosure, a method of selecting a subcarrier bandwidth for uplink transmission executed by a user equipment (UE) is provided, the method comprising: receiving indication information from a base station, the indication information being used to indicate a subcarrier bandwidth for a single-tone transmission in a first Narrowband Internet of Thing physical uplink shared channel (NB-PUSCH) and/or in a second NB-PUSCH after NB-PRACH transmission; and selecting a subcarrier bandwidth for the single-tone transmission according to the received indication information.

According to another aspect of the present disclosure, a method of indicating a subcarrier bandwidth for uplink transmission executed by a base station is provided, the method comprising: generating first indication information, the first indication information being used to indicate a first set of subcarrier bandwidths for uplink transmission available for a carrier; determining that the first set of subcarrier bandwidths comprises a plurality of subcarrier bandwidth types; generating second indication information, the second indication information being used to indicate a second set of subcarrier bandwidths for uplink transmission available for a user equipment (UE), and the second set being a subset or a full set of the first set; further determining that the second set of the subcarrier bandwidths comprising a plurality of subcarrier bandwidth types; generating third indication information, the third indication information being used to indicate a subcarrier bandwidth for uplink transmission of the UE, and the subcarrier bandwidth being one of the subcarrier bandwidths in the second set; and sending to the UE the generated first indication information, second indication information, and third indication information.

According to another aspect of the present disclosure, a method of selecting a subcarrier bandwidth for uplink transmission executed by a user equipment (UE) is provided, the method comprising: receiving first indication information from a base station, the first indication information being used to indicate a first set of subcarrier bandwidths for uplink transmission available for a carrier; determining whether second indication information is received from the base station, the second indication information being used to indicate a second set of subcarrier bandwidths for uplink transmission available for the UE, and the second set being a subset or a full set of the first set; if it is determined that the second indication information is received from the base station, further determining whether third indication information is received from the base station, the third indication information being used to indicate a subcarrier bandwidth the UE uses for uplink transmission, and the subcarrier bandwidth being one of the subcarrier bandwidths in the second set; and if it is determined that the third indication information is received from the base station, selecting a subcarrier bandwidth for uplink transmission according to at least the third indication information.

According to another aspect of the present disclosure, a method of indicating a subcarrier bandwidth for uplink transmission executed by a base station is provided, the method comprising: generating first indication information, the first indication information being used to indicate a first set of subcarrier bandwidths for uplink transmission available for a user equipment (UE), and the first set being a subset or a full set of a set of subcarrier bandwidths for uplink transmission available for a predefined carrier; determining that the first set of the subcarrier bandwidths comprises a plurality of subcarrier bandwidth types; generating second indication information, the second indication information being used to indicate a subcarrier bandwidth the UE uses for uplink transmission, and the subcarrier bandwidth being one of the subcarrier bandwidths in the first set; and sending to the UE the generated first indication information and second indication information.

According to another aspect of the present disclosure, a method of selecting a subcarrier bandwidth for uplink transmission executed by a user equipment (UE) is provided, the method comprising: receiving first indication information from a base station, the first indication information being used to indicate a first set of subcarrier bandwidths for uplink transmission available for the UE, and the first set being a subset or a full set of a set of subcarrier bandwidths for uplink transmission available for a predefined carrier; determining whether second indication information is received from the base station, the second indication information being used to indicate a subcarrier bandwidth the UE uses for uplink transmission, and the subcarrier bandwidth being one of the subcarrier bandwidths in the first set; and if it is determined that the second indication information is received from the base station, selecting a subcarrier bandwidth for uplink transmission according to at least the second indication information.

According to another aspect of the present disclosure, a method of indicating a subcarrier bandwidth for uplink transmission executed by a base station is provided, the method comprising: generating first indication information, the first indication information being used to indicate a first set of subcarrier bandwidths for uplink transmission available for a carrier; determining that the first set of subcarrier bandwidths comprises a plurality of subcarrier bandwidth types; generating second indication information, the second indication information being used to indicate that a subcarrier bandwidth a UE uses for uplink transmission is switched from a default subcarrier bandwidth to a predetermined subcarrier bandwidth, and the predetermined subcarrier bandwidth being one of the subcarrier bandwidths excluding the default subcarrier bandwidth in the first set; and sending to the UE the generated first indication information and second indication information.

According to another aspect of the present disclosure, a method of selecting a subcarrier bandwidth for uplink transmission executed by a user equipment (UE) is provided, the method comprising: receiving first indication information from a base station, the first indication information being used to indicate a first set of subcarrier bandwidths for uplink transmission available for a carrier; determining whether second indication information is received from the base station, the second indication information being used to indicate a subcarrier bandwidth that the UE uses for uplink transmission is switched from a default subcarrier bandwidth to a predetermined subcarrier bandwidth, and the predetermined subcarrier bandwidth being one of the subcarrier bandwidths excluding the default subcarrier bandwidth in the first set in the first set; and if it is determined that the second indication information is received from the base station, selecting a subcarrier bandwidth for uplink transmission according to at least the second indication information.

According to another aspect of the present disclosure, a method of indicating a subcarrier bandwidth for uplink transmission executed by a base station is provided, the method comprising: generating indication information, the indication information being used to indicate to a subcarrier bandwidth a user equipment (UE) uses for uplink transmission is switched from a default subcarrier bandwidth to a predetermined subcarrier bandwidth, and the predetermined subcarrier bandwidth being one of subcarrier bandwidths excluding the default subcarrier bandwidths in a set of subcarrier bandwidths for uplink transmission available for a predefined carrier; and sending the generated indication information to the UE.

According to another aspect of the present disclosure, a method of selecting a subcarrier bandwidth for uplink transmission executed by a user equipment (UE) is provided, the method comprising: receiving indication information from a base station, the indication information being used to indicate a subcarrier bandwidth the UE uses for uplink transmission is switched from a default subcarrier bandwidth to a predetermined subcarrier bandwidth, and the predetermined subcarrier bandwidth being one of subcarrier bandwidths excluding the default subcarrier bandwidths in a set of subcarrier bandwidths for uplink transmission available for a predefined carrier; and selecting a subcarrier bandwidth for uplink transmission according to the received indication information.

According to another aspect of the present disclosure, a base station is provided, comprising:
a generation unit, configured to generate indication information, the indication information being used to indicate a subcarrier bandwidth for single-tone transmission in a first NB-PUSCH and/or a second NB-PUSCH after NB-PRACH transmission; and
a transceiver, configured to send to a UE the generated indication information to indicate to the UE a subcarrier bandwidth for the single-tone transmission.

According to another aspect of the present invention, a user equipment (UE) is provided, comprising:
a transceiver, configured to receive indication information from a base station, the indication information being used to indicate a subcarrier bandwidth for single-tone transmission in a first NB-PUSCH and/or a second NB-PUSCH after NB-PRACH transmission; and
a selection unit, configured to select a subcarrier bandwidth for the single-tone transmission according to the received indication information.

According to another aspect of the present disclosure, a base station is provided, comprising: a generation unit, a determination unit, and a transceiver, wherein
the generation unit is configured to generate first indication information, the first indication information being used to indicate a first set of subcarrier bandwidths for uplink transmission available for a carrier; generate second indication information when the determination unit determines that the first set of subcarrier bandwidths comprises a plurality of subcarrier bandwidth types, the second indication information being used to indicate a second set of subcarrier bandwidths for uplink transmission available for a user equipment (UE), and the second set being a subset or a full set of the first set; and generate third indication information when the determination unit further determines that the second set of subcarrier bandwidths comprising a plurality of subcarrier bandwidth types, the third indication information being used to indicate a subcarrier bandwidth the UE uses for uplink transmission, and the subcarrier bandwidth being one of the subcarrier bandwidths in the second set;
the determination unit is configured to determine whether the first set of subcarrier bandwidths comprises a plurality of subcarrier bandwidth type and determine whether the second set of subcarrier bandwidths comprises a plurality of subcarrier bandwidth types; and
the transceiver is configured to send to the UE at least the generated first indication information.

According to another aspect of the present disclosure, a UE is provided, comprising: a transceiver, a determination unit, and a selection unit, wherein
the transceiver is configured to receive first indication information from a base station, the first indication information being used to indicate a first set of subcarrier bandwidths for uplink transmission available for a carrier;
the determination unit is configured to determine whether second indication information is received from the base station, the second indication information being used to indicate a second set of subcarrier bandwidths for uplink transmission available for the UE, and the second set being a subset or a full set of the first set; if it is determined that the second indication information is received from the base station, further determining whether third indication information is received from the base station, the third indication information being used to indicate a subcarrier bandwidth the UE uses for uplink transmission, and the subcarrier bandwidth being one of the subcarrier bandwidths in the second set; and
the selection unit is configured to, when the determination unit determines that the third indication information is received from the base station, select a subcarrier bandwidth for uplink transmission according to at least the third indication information.

According to another aspect of the present disclosure, a base station is provided, comprising: a generation unit, a determination unit, and a transceiver, wherein
the generation unit is configured to generate first indication information, the first indication information being used to indicate a first set of subcarrier bandwidths for uplink transmission available for a user equipment (UE), the first set being a subset or a full set of a set of subcarrier bandwidths for uplink transmission available for a predefined carrier; and generate second indication information when the determination unit determines that the first set of subcarrier bandwidths comprises a plurality of subcarrier bandwidth types, the second indication information being used to indicate a subcarrier bandwidth the UE uses for uplink transmission, and the subcarrier bandwidth being one of the subcarrier bandwidths in the first set;
the determination unit is configured to determine whether the first set of subcarrier bandwidths comprises a plurality of subcarrier bandwidth types; and
the transceiver is configured to send to the UE at least the generated first indication information.

According to another aspect of the present disclosure, a UE is provided, comprising: a transceiver, a determination unit, and a selection unit, wherein
the transceiver is configured to receive first indication information from a base station, the first indication information being used to indicate a first set of subcarrier bandwidths for uplink transmission available for the UE, and the first set being a subset or a full set of a set of subcarrier bandwidths for uplink transmission available for a predefined carrier;
the determination unit is configured to determine whether second indication information is received from the base station, the second indication information being used to indicate a subcarrier bandwidth the UE uses for uplink transmission, and the subcarrier bandwidth being one of the subcarrier bandwidths in the first set; and
the selection unit is configured to, when the determination unit determines that the second indication information is received from the base station, select a subcarrier bandwidth for uplink transmission according to at least the second indication information.

According to another aspect of the present disclosure, a base station is provided, comprising: a generation unit, a determination unit, and a transceiver, wherein
the generation unit is configured to generate first indication information, the first indication information being used to indicate a first set of subcarrier bandwidths for uplink transmission available for a carrier; and generate second indication information when the determination unit determines that the first set of subcarrier bandwidths comprises a plurality of subcarrier bandwidth types, the second indication information being used to indicate a subcarrier bandwidth a user equipment (UE) uses for uplink transmission is switched from a default subcarrier bandwidth to a predetermined subcarrier bandwidth, and the predetermined subcarrier bandwidth being one of the subcarrier bandwidths excluding the default subcarrier. bandwidth in the first set;
the determination unit is configured to determine whether the first set of subcarrier bandwidths comprises a plurality of subcarrier bandwidth types; and
the transceiver is configured to send to the UE at least the generated first indication information.

According to another aspect of the present disclosure, a UE is provided, comprising: a transceiver, a determination unit, and a selection unit, wherein
the transceiver is configured to receive first indication information from a base station, the first indication information being used to indicate a first set of subcarrier bandwidths for uplink transmission available for a carrier;
the determination unit is configured to determine whether second indication information is received from the base station, the second indication information being used to indicate a subcarrier bandwidth the UE uses for uplink transmission is switched from a default subcarrier bandwidth to a predetermined subcarrier bandwidth, and the predetermined subcarrier bandwidth being one of the subcarrier bandwidths excluding the default subcarrier bandwidth in the first set; and
the selection unit is configured to, when the determination unit determines that the second indication information is received from the base station, select a subcarrier bandwidth for uplink transmission according to at least the second indication information.

According to another aspect of the present disclosure, a base station is provided, comprising:
a generation unit configured to generate indication information, the indication information being used to indicate to a subcarrier bandwidth a UE uses for uplink transmission is switched from a default subcarrier bandwidth to a predetermined subcarrier bandwidth, and the predetermined subcarrier bandwidth being one of subcarrier bandwidths excluding the default subcarrier bandwidths in a set of subcarrier bandwidths for uplink transmission available for a predefined carrier; and
a transceiver configured to send to the UE the generated indication information.

According to another aspect of the present disclosure, a UE is provided, comprising:
a transceiver, configured to receive indication information from a base station, the indication information being used to indicate a subcarrier bandwidth the UE uses for uplink transmission is switched from a default subcarrier bandwidth to a predetermined subcarrier bandwidth, and the predetermined subcarrier bandwidth being one of subcarrier bandwidths excluding the default subcarrier bandwidths in a set of subcarrier bandwidths for uplink transmission available for a predefined carrier; and
a selection unit configured to select a subcarrier bandwidth for uplink transmission according to the received indication information.

### Brief Description of Drawings

The above and other features of the present invention will be more pronounced through the following detailed description taken in conjunction with the accompanying drawings.
FIG. 1 schematically shows a flowchart of a method of indicating a subcarrier bandwidth for uplink transmission executed by a base station according to a first embodiment of the present invention;
FIG. 2 schematically shows a flowchart of a method of selecting a subcarrier bandwidth for uplink transmission executed by a UE according to the first embodiment of the present invention;
FIG. 3 schematically shows a flowchart of a method of indicating a subcarrier bandwidth for uplink transmission executed by a base station according to a second embodiment of the present invention;
FIG. 4 schematically shows a flowchart of a method of selecting a subcarrier bandwidth for uplink transmission executed by a UE according to the second embodiment of the present invention;
FIG. 5 schematically shows a flowchart of a method of indicating a subcarrier bandwidth for uplink transmission executed by a base station according to a third embodiment of the present invention;
FIG. 6 schematically shows a flowchart of a method of selecting a subcarrier bandwidth for uplink transmission executed by a UE according to the third embodiment of the present invention;
FIG. 7 schematically shows a flowchart of a method of indicating a subcarrier bandwidth for uplink transmission executed by a base station according to a fourth embodiment of the present invention;
FIG. 8 schematically shows a flowchart of a method of selecting a subcarrier bandwidth for uplink transmission executed by a UE according to the fourth embodiment of the present invention;
FIG. 9 schematically shows a flowchart of a method of indicating a subcarrier bandwidth for uplink transmission executed by a base station according to a fifth embodiment of the present invention;
FIG. 10 schematically shows a flowchart of a method of selecting a subcarrier bandwidth for uplink transmission executed by a UE according to the fifth embodiment of the present invention;
FIG. 11 schematically shows a structural block diagram of a base station according to an embodiment of the present invention; and
FIG. 12 schematically shows a structural block diagram of a UE according to an embodiment of the present invention.

### Description of Embodiments

The following describes the present invention in detail with reference to the accompanying drawings and specific implementations. It should be noted that the present invention is not limited to the specific embodiments described below. In addition, for simplicity, detailed description of the known art not directly related to the present invention is omitted to prevent confusion with respect to the understanding of the present invention.

Multiple embodiments according to the present disclosure are specifically described below by using an LTE mobile communication system and its subsequent evolved version as an exemplary application environment. However, it is to be noted that the present disclosure is not limited to the following embodiments, but may be applied to other wireless communication systems, such as a future 5G cellular communication system.

The third, fourth and the fifth embodiment include some but not all features as literally defined in the claims and are thus not part of the present invention.

To facilitate illustration, we use NB-Msg3 to refer to a first NB-PUSCH after NB-PRACH transmission, and NB-Msg5 is used to refer to a second NB-PUSCH after NB-PRACH transmission.

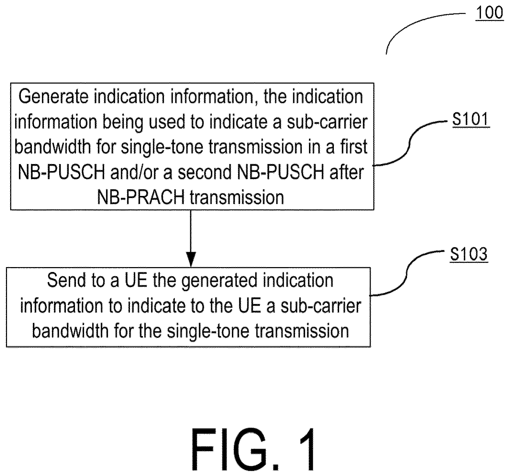

FIG. 1 schematically shows a flowchart of a method, executed by a base station, of indicating a subcarrier bandwidth for single-tone uplink transmission in an NB-Msg3 and/or NB-Msg5 according to a first embodiment of the present invention. As shown in FIG. 1, a method 100 comprises the following steps.

Step S101: A base station generates indication information, the indication information being used to indicate a subcarrier bandwidth for single-tone transmission in the NB-Msg3 and/or NB-Msg5.

An NB-IoT random access response (RAR) message is used to carry the indication information. The indication information may be a bit string; and different values of the bit string are used to indicate subcarrier bandwidths for single-tone transmission in the NB-Msg3 and/or NB-Msg5.
■ For example, in an implementation, the indication information in the RAR being 0 may indicate that a subcarrier bandwidth for single-tone transmission in the NB-Msg3 and/or NB-Msg5 is 3.75 kHz; the indication information in the RAR being 1 may indicate that a subcarrier bandwidth for single-tone transmission in the NB-Msg3 and/or NB-Msg5 is 15 kHz.
■ In another implementation, the indication information in the RAR being 1 may indicate that a subcarrier bandwidth for single-tone transmission in the NB-Msg3 and/or NB-Msg5 is 3.75 kHz; the indication information in the RAR being 0 may indicate that a subcarrier bandwidth for single-tone transmission in the NB-Msg3 and/or NB-Msg5 is 15 kHz.

Step S103: The base station sends to a UE the generated indication information to indicate to the UE a subcarrier bandwidth for single-tone transmission in the NB-Msg3 and/or NB-Msg5.

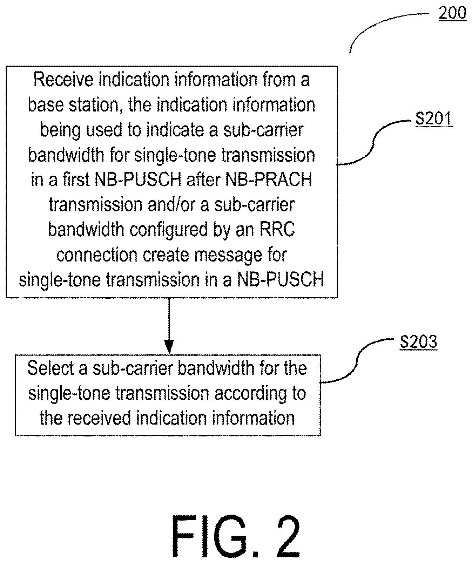

FIG. 2 schematically shows a flowchart of a method, executed by a UE, of selecting a subcarrier bandwidth for single-tone uplink transmission in a NB-Msg3 and/or NB-Msg5 according to the first embodiment of the present invention. As shown in FIG. 2, a method 200 comprises the following steps.

Step S201: A UE receives, from the base station, the indication information generated by the base station in the method 100, the indication information being used to indicate a subcarrier bandwidth for single-tone transmission in the NB-Msg3 and/or NB-Msg5; and

Step S203: The UE selects a subcarrier bandwidth for single-tone transmission in the NB-Msg3 and/or NB-Msg5 according to the received indication information.

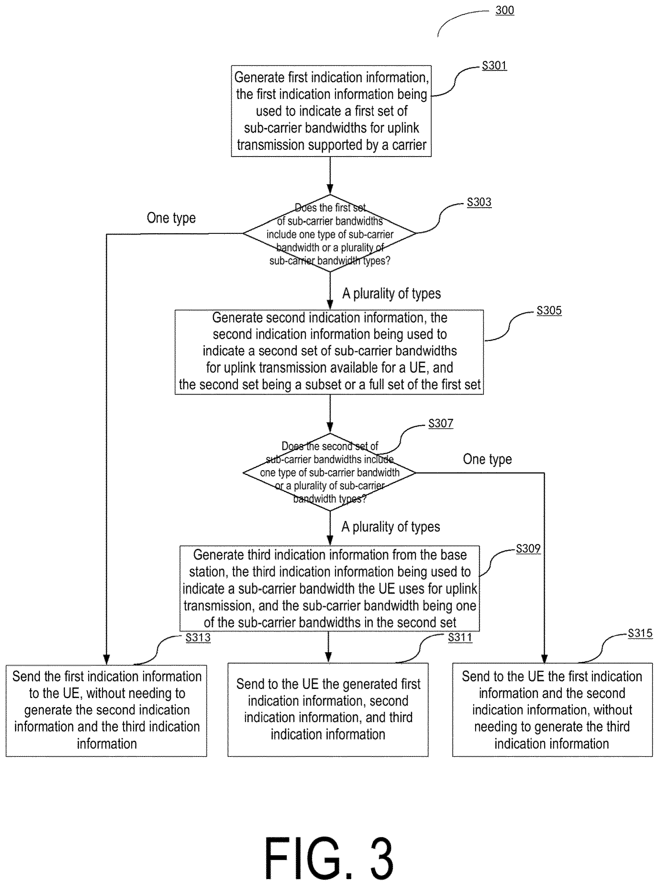

FIG. 3 schematically shows a flowchart of a method of indicating a subcarrier bandwidth for uplink transmission executed by a base station according to a second embodiment of the present invention. In what follows, an example of uplink transmission in an NB-PUCCH and/or NB-PUSCH is used for illustration. It should be understood that the NB-PUCCH and/or NB-PUSCH is presented only as an example of uplink transmission herein, and uplink transmission is not limited to the NB-PUCCH and/or NB-PUSCH.

As shown in FIG. 3, a method 300 comprises the following steps.

Step S301: A base station generates first indication information, the first indication information being used to indicate a first set of subcarrier bandwidths for uplink transmission available for a carrier.

In an implementation, an SIB-1, an SIB-2, an MIB, or an NB-SSS sequence may be used to carry the first indication information. The first indication information is used to indicate a first set of subcarrier bandwidths for uplink transmission available for a carrier. For example, the first indication information may indicate that the carrier can use at least one of three types of subcarrier bandwidth for uplink transmission, including single-tone 3.75 kHz, single-tone 15 kHz, and multi-tone 15 kHz.

Step S303: It is determined whether the first set of subcarrier bandwidths includes one type of subcarrier bandwidth or a plurality of subcarrier bandwidth types.

If it is determined that the first set of subcarrier bandwidths for uplink transmission available for the carrier indicated by the first indication information merely includes one type of subcarrier bandwidth (e.g., the single-tone 3.75 kHz), the method 300 proceeds to step S313, in which the first indication information is sent to the UE to instruct the UE to select that only type of subcarrier bandwidth for uplink transmission in, for example, the NB-PUCCH and/or NB-PUSCH, without needing to generate second indication information and third indication information.

If it is determined that the first set of subcarrier bandwidths for uplink transmission available for the carrier indicated by the first indication information includes a plurality of subcarrier bandwidth types, the method 300 proceeds to step S305, in which second indication information is generated, the second indication information being used to indicate a second set of subcarrier bandwidths for uplink transmission available for the UE, and the second set being a subset or a full set of the first set.

An RRC message may be used to carry the second indication information. The second indication information may include a bit string indicating the second set of subcarrier bandwidths for uplink transmission available for the UE.

Step S307: It is further determined whether the second set of subcarrier bandwidths includes one type of subcarrier bandwidth or a plurality of subcarrier bandwidth types.

If it is determined that the first set of subcarrier bandwidths includes a plurality of subcarrier bandwidth types, and it is further determined that the second set of subcarrier bandwidths for uplink transmission available for the UE indicated by the second indication information merely includes one type of subcarrier bandwidth (e.g., the single-tone 3.75 kHz), the method 300 proceeds to step S315, in which the first indication information and the second indication information are sent to the UE to instruct the UE to select that only type of subcarrier bandwidth for uplink transmission in, for example, the NB-PUCCH and/or NB-PUSCH, without needing to generate third indication information.

If the second set of subcarrier bandwidths for uplink transmission available for the UE indicated by the second indication information includes a plurality of subcarrier bandwidth types, the method 300 proceeds to step S309, in which third indication information is generated, the third indication information being used to indicate a subcarrier bandwidth the UE uses for uplink transmission, and the subcarrier bandwidth being one of the subcarrier bandwidths in the second set.

The third indication information may be carried by an NB-PDCCH. Specifically, the third indication information may be included in downlink control information (DCI) carried by the NB-PDCCH. The third indication information includes a bit string indicating a subcarrier bandwidth the UE uses for uplink transmission in, for example, the NB-PUSCH and/or NB-PUCCH.

Step S311: The generated first indication information, second indication information and third indication information are sent to the UE.

In an example, the SIB-1, the SIB-2, the MIB, or the NB-SSS may be used to carry the first indication information. The first indication information is used to indicate to the carrier that two types of subcarrier bandwidth for uplink transmission may be used, including the single-tone 3.75 kHz and the single-tone 15 kHz.

The RRC information may be used to carry the second indication information. The second indication information is used to indicate a subcarrier bandwidth for uplink transmission available for the UE; for example, the subcarrier bandwidths for uplink transmission may be the single-tone 3.75 kHz and the single-tone 15 kHz, or one of them.

As described in the foregoing, when the second indication information indicates merely one type of subcarrier bandwidth (e.g., the single-tone 3.75 kHz) for uplink transmission available for the UE, third indication information does not need to be generated.

When the second indication information indicates two types of subcarrier bandwidth for uplink transmission available for the UE, the NB-PDCCH may be used to carry third indication information. The third indication information is used to indicate a subcarrier bandwidth the UE uses for transmission in the NB-PUSCH and/or NB-PUCCH, the subcarrier bandwidth being one of the subcarrier bandwidths configured by the second indication information for transmission in the NB-PUSCH and/or NB-PUCCH.

In another example, the SIB-1, the SIB-2, the MIB, or the NB-SSS may be used to carry the first indication information. The first indication information is used to indicate to the carrier that two types of subcarrier bandwidth for uplink transmission may be used, including the single-tone 3.75 kHz and the multi-tone 15 kHz.

The RRC information may be used to carry the second indication information. The second indication information is used to indicate a subcarrier bandwidth for uplink transmission available for the UE; for example, the subcarrier bandwidths for uplink transmission may be the single-tone 3.75 kHz and the multi-tone 15 kHz, or one of them.

When the second indication information indicates merely one type of subcarrier bandwidth (e.g., the single-tone 3.75 kHz) for uplink transmission available for the UE, third indication information does not need to be generated.

When the second indication information indicates two types of subcarrier bandwidth for uplink transmission available for the UE, the NB-PDCCH may be used to carry third indication information. The third indication information is used to indicate a subcarrier bandwidth the UE uses for transmission in the NB-PUSCH and/or NB-PUCCH, the subcarrier bandwidth being one of the transmission types configured by the second indication information.

In another example, the SIB-1, the SIB-2, the MIB, or the NB-SSS may be used to carry the first indication information. The first indication information is used to indicate to the carrier that two types of subcarrier bandwidth for uplink transmission may be used, including the single-tone 15 kHz and the multi-tone 15 kHz.

The RRC information may be used to carry the second indication information. The second indication information is used to indicate a subcarrier bandwidth for uplink transmission available for the UE; for example, the subcarrier bandwidths for uplink transmission may be the single-tone 15 kHz and the multi-tone 15 kHz, or one of them.

When the second indication information indicates merely one type of subcarrier bandwidth (e.g., the single-tone 15 kHz) for uplink transmission available for the UE, third indication information does not need to be generated.

When the second indication information indicates two types of subcarrier bandwidth for uplink transmission available for the UE, the NB-PDCCH may be used to carry third indication information. The third indication information is used to indicate a subcarrier bandwidth the UE uses for transmission in the NB-PUSCH and/or NB-PUCCH, the subcarrier bandwidth being one of the transmission types configured by the second indication information.

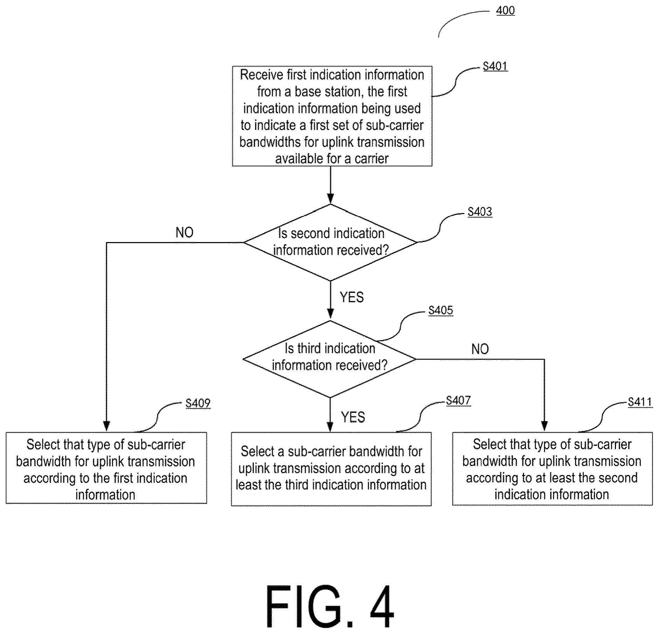

FIG. 4 schematically shows a flowchart of a method of selecting a subcarrier bandwidth for uplink transmission executed by a UE according to the second embodiment of the present invention. As shown in FIG. 4, a method 400 comprises the following steps.

Step S401: A UE receives from a base station the first indication information generated by the base station in the method 400, the first indication information being used to indicate a first set of subcarrier bandwidths for uplink transmission available for a carrier.

Step S403: The UE determines whether second indication information is received from the base station, the second indication information being used to indicate a second set of subcarrier bandwidths for uplink transmission available for the UE, and the second set being a subset or a full set of the first set.

If it is determined that the second indication information is received from the base station ("yes" in step S403), it is further determined in step S405 whether third indication information is received from the base station, the third indication information being used to indicate a subcarrier bandwidth the UE uses for uplink transmission, and the subcarrier bandwidth being one of the subcarrier bandwidths in the second set.

If it is determined that the third indication information is received from the base station ("yes" in step S405), then in step S407, a subcarrier bandwidth for uplink transmission is selected according to at least the third indication information.

If it is determined that the second indication information is not received from the base station ("no" in step S403) and the first set of subcarrier bandwidths includes one type of subcarrier bandwidth, then in step S409, that type of subcarrier bandwidth is selected for uplink transmission according to the first indication information.

If it is determined that the third indication information is not received from the base station ("no" in step S405) and the first set of subcarrier bandwidths comprises a plurality of subcarrier bandwidth types and the second set of subcarrier bandwidths comprises one type of subcarrier bandwidth, then in step S411, that type of subcarrier bandwidth is selected for uplink transmission according to at least the second indication information.

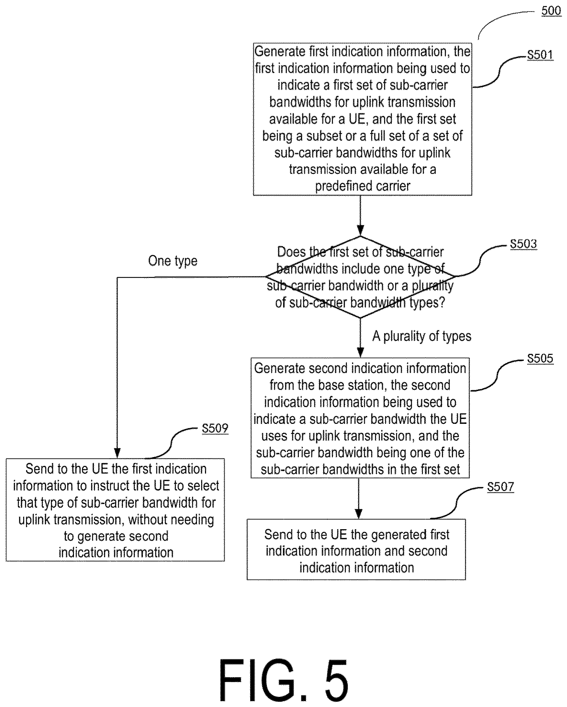

FIG. 5 schematically shows a flowchart of a method of indicating a subcarrier bandwidth for uplink transmission executed by a base station according to a third embodiment of the present invention. As shown in FIG. 5, a method 500 comprises the following steps.

Step S501: A base station generates first indication information, the first indication information being used to indicate a first set of subcarrier bandwidths for uplink transmission available for a UE, and the first set being a subset or a full set of a set of subcarrier bandwidths for uplink transmission available for a predefined carrier.

In an implementation, the set of subcarrier bandwidths available for the predefined carrier includes three types of uplink transmission: single-tone 3.75 kHz, single-tone 15 kHz, and multi-tone 15 kHz. The first set is a subset or a full set of the set of subcarrier bandwidths for uplink transmission available for the predefined carrier.

The first indication information can be carried by an RRC message, and the first indication information is used to indicate a subcarrier bandwidth for uplink transmission available for the UE. For example, the first indication information may indicate that the UE can use at least one of three types of subcarrier bandwidth for uplink transmission, including the single-tone 3.75 kHz, the single-tone 15 kHz, and the multi-tone 15 kHz.

Step S503: The base station determines whether the first set of subcarrier bandwidths includes one type of subcarrier bandwidth or a plurality of subcarrier bandwidth types.

If it is determined that the first set of subcarrier bandwidths merely includes one type of subcarrier bandwidth, then the method 500 proceeds to step S509, in which the base station sends to the UE the first indication information to instruct the UE to select that only type of subcarrier bandwidth for uplink transmission, without needing to generate the second indication information.

If it is determined that the first set of subcarrier bandwidths includes a plurality of subcarrier bandwidth types, then the method 500 proceeds to step S505, in which second indication information is generated, the second indication information being used to indicate a subcarrier bandwidth the UE uses for uplink transmission, and the subcarrier bandwidth being one of the subcarrier bandwidths in the first set.

The second indication information may be included in DCI carried by an NB-PDCCH.

Step S507: The generated first indication information and second indication information are sent to the UE to indicate to the UE a subcarrier bandwidth for single-tone uplink transmission or multi-tone uplink transmission in, for example, the NB-PUCCH and/or NB-PUSCH.

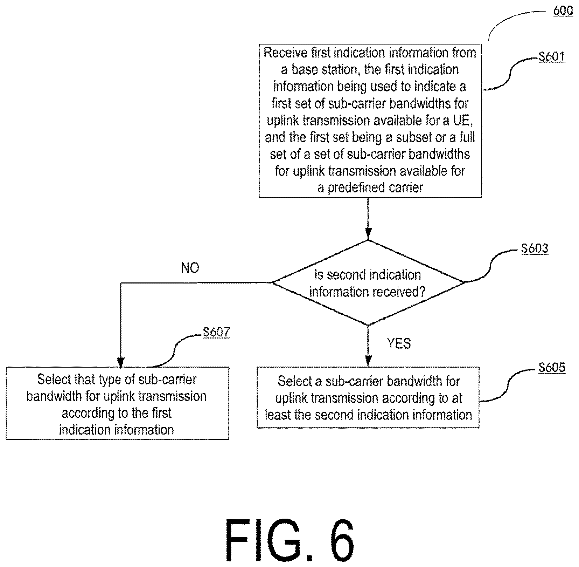

FIG. 6 schematically shows a flowchart of a method of selecting a subcarrier bandwidth for uplink transmission executed by a UE according to the third embodiment of the present invention. As shown in FIG. 6, a method 600 comprises the following steps.

Step S601: A UE receives first indication information from a base station, the first indication information being used to indicate a first set of subcarrier bandwidths for uplink transmission available for a UE, and the first set being a subset or a full set of a set of subcarrier bandwidths for uplink transmission available for a predefined carrier.

Step S603: The UE determines whether second indication information is received from the base station, the second indication information being used to indicate a subcarrier bandwidth the UE uses for uplink transmission, and the subcarrier bandwidth being one of the subcarrier bandwidths in the first set.

If it is determined that the second indication information is received from the base station ("yes" in step S603), then in step S605, a subcarrier bandwidth for uplink transmission is selected according to at least the second indication information.

If it is determined that the second indication information is not received from the base station ("no" in step S603) and the first set of subcarrier bandwidths includes one type of subcarrier bandwidth, then in step S607, that only type of subcarrier bandwidth is selected for uplink transmission according to the first indication information.

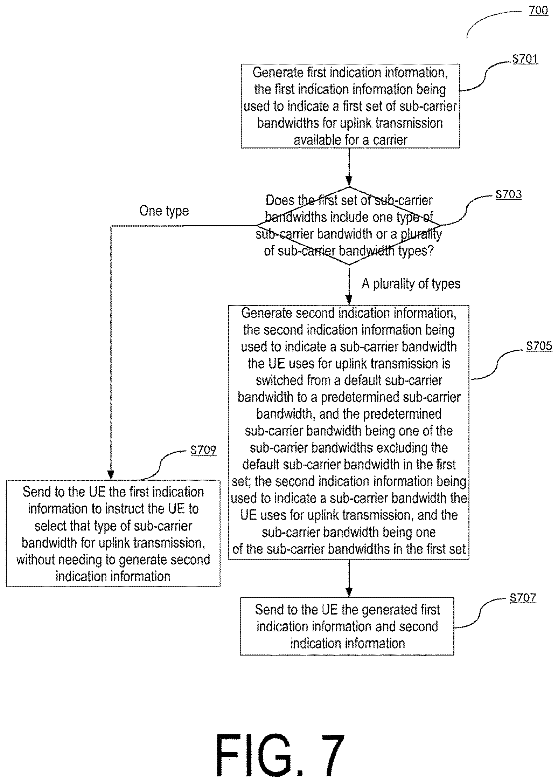

FIG. 7 schematically shows a flowchart of a method of indicating a subcarrier bandwidth for uplink transmission executed by a base station according to a fourth embodiment of the present invention. As shown in FIG. 7, a method 700 comprises the following steps.

Step S701: A base station generates first indication information, the first indication information being used to indicate a first set of subcarrier bandwidths for uplink transmission available for a carrier.

The first indication information may be carried by one of the following: an NB-SSS sequence; an MIB; an SIB-1 or SIB-2; or an NB-RAR message.

For example, the first indication information may indicate that the carrier can use at least one of three types of uplink transmission: single-tone 3.75 kHz, single-tone 15 kHz, and multi-tone 15 kHz.

Step S703: The base station determines whether the first set of subcarrier bandwidths includes one type of subcarrier bandwidth or a plurality of subcarrier bandwidth types.

If it is determined that the first set of subcarrier bandwidths merely includes one type of subcarrier bandwidth, then the method 700 proceeds to step S709, in which the base station sends to the UE the first indication information to instruct the UE to select that only type of subcarrier bandwidth for uplink transmission, without needing to generate the second indication information.

If it is determined that the first set of subcarrier bandwidths includes a plurality of subcarrier bandwidth types, then the method 500 proceeds to step S705, in which second indication information is generated, the second indication information being used to indicate a subcarrier bandwidth the UE uses for uplink transmission is switched from a default subcarrier bandwidth to a predetermined subcarrier bandwidth, and the predetermined subcarrier bandwidth being one of the subcarrier bandwidths excluding the default subcarrier bandwidth in the first set.

The second indication information may be carried by an RRC message or be included in DCI carried by an NB-PDCCH.
■ In an implementation, if the default transmission in the NB-PUSCH and/or NB-PUCCH is the single-tone 3.75 kHz, then the second indication information is a bit string used to indicate the transmission type the UE uses in the NB-PUSCH and/or NB-PUCCH is switched from the default single-tone 3.75 kHz to the single-tone 15 kHz.
■ In another implementation, if the default transmission in the NB-PUSCH and/or NB-PUCCH is the single-tone 15 kHz, then the second indication information is a bit string used to indicate the transmission type the UE uses in the NB-PUSCH and/or NB-PUCCH is switched from the default single-tone 15 kHz to the single-tone 3.75 kHz.
■ In another implementation, if the default transmission in the NB-PUSCH and/or NB-PUCCH is the single-tone 3.75 kHz and/or single-tone 15 kHz, then the second indication information is a bit string used to indicate the transmission type the UE uses in the NB-PUSCH and/or NB-PUCCH is switched from the default single-tone 3.75 kHz and/or single-tone 15 kHz to the multi-tone 15 kHz.
■ In another implementation, if the default transmission in the NB-PUSCH and/or NB-PUCCH is the multi-tone 15 kHz, the second indication information is a bit string used to indicate the transmission type the UE uses in the NB-PUSCH and/or NB-PUCCH is switched from the default multi-tone 15 kHz to the single-tone 3.75 kHz and/or single-tone 15 kHz.

Step S707: The generated first indication information and second indication information are sent to the UE to indicate to the UE a subcarrier bandwidth for single-tone uplink transmission or multi-tone uplink transmission in, for example, the NB-PUCCH and/or NB-PUSCH.

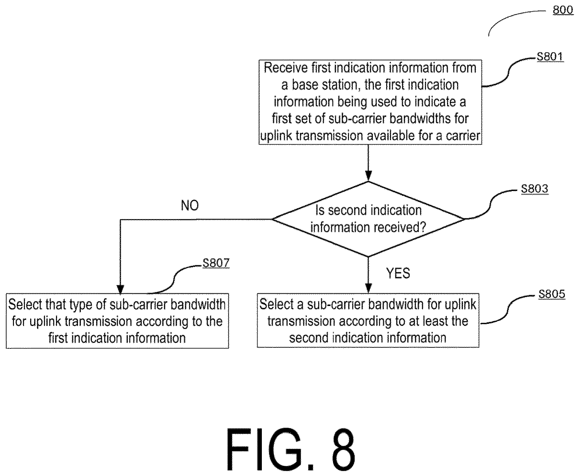

FIG. 8 schematically shows a flowchart of a method of selecting a subcarrier bandwidth for uplink transmission executed by a UE according to the fourth embodiment of the present invention. As shown in FIG. 8, a method 800 comprises the following steps.

Step S801: AUE receives first indication information from a base station, the first indication information being used to indicate a first set of subcarrier bandwidths for uplink transmission available for a carrier.

Step S803: The UE determines whether second indication information is received from the base station, the second indication information being used to indicate a subcarrier bandwidth the UE uses for uplink transmission is switched from a default subcarrier bandwidth to a predetermined subcarrier bandwidth, and the predetermined subcarrier bandwidth being one of the subcarrier bandwidths excluding the default subcarrier bandwidth in the first set.

If it is determined that the second indication information is received from the base station ("yes" in step S803), then in step S805, a subcarrier bandwidth for uplink transmission is selected according to at least the second indication information.

If it is determined that the second indication information is not received from the base station ("no" in step S803) and the first set of subcarrier bandwidths includes one type of subcarrier bandwidth, then in step S807, that only type of subcarrier bandwidth is selected for uplink transmission according to the first indication information.

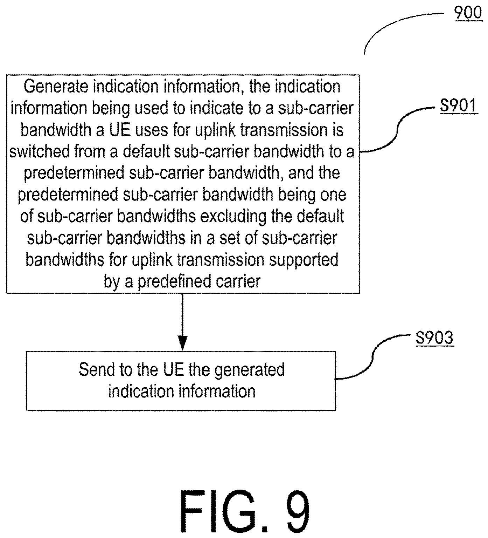

FIG. 9 schematically shows a flowchart of a method of indicating a subcarrier bandwidth for uplink transmission executed by a base station according to a fifth embodiment of the present invention. As shown in FIG. 9, a method 900 comprises the following steps.

Step S901: Abase station generates indication information, the indication information being used to indicate to a subcarrier bandwidth a UE uses for uplink transmission is switched from a default subcarrier bandwidth to a predetermined subcarrier bandwidth, and the predetermined subcarrier bandwidth being one of subcarrier bandwidths excluding the default subcarrier bandwidths in a set of subcarrier bandwidths for uplink transmission available for a predefined carrier.

In an implementation, the predefined carrier can use three types of uplink transmission, including single-tone 3.75 kHz, single-tone 15 kHz, and multi-tone 15 kHz.

The indication information is carried by an RRC message or included in DCI carried by an NB-PDCCH.

Specifically, the indication information is used to indicate that a subcarrier bandwidth for uplink transmission in, for example, the NB-PUSCH and/or NB-PUCCH is switched from a default subcarrier bandwidth to a predetermined subcarrier bandwidth.
■ In an implementation, if the default transmission in the NB-PUSCH and/or NB-PUCCH is the single-tone 3.75 kHz, then the first indication information is a bit string used to indicate the transmission type the UE uses in the NB-PUSCH and/or NB-PUCCH is switched from the default single-tone 3.75 kHz to the single-tone 15 kHz.
■ In another implementation, if the default transmission in the NB-PUSCH and/or NB-PUCCH is the single-tone 15 kHz, then the first indication information is a bit string used to indicate the transmission type the UE uses in the NB-PUSCH and/or NB-PUCCH is switched from the default single-tone 15 kHz to the single-tone 3.75 kHz.
■ In another implementation, if the default transmission in the NB-PUSCH and/or NB-PUCCH is the single-tone 3.75 kHz and/or single-tone 15 kHz, then the first indication information is a bit string used to indicate the transmission type the UE uses in the NB-PUSCH and/or NB-PUCCH is switched from the default single-tone 3.75 kHz and/or single-tone 15 kHz to the multi-tone 15 kHz.
■ In another implementation, if the default transmission in the NB-PUSCH and/or NB-PUCCH is the multi-tone 15 kHz, then the first indication information is a bit string used to indicate the transmission type the UE uses in the NB-PUSCH and/or NB-PUCCH is switched from the default multi-tone 15 kHz to the single-tone 3.75 kHz and/or single-tone 15 kHz.

Step S903: The generated indication information is sent to the UE to indicate to the UE a subcarrier bandwidth for single-tone uplink transmission or multi-tone uplink transmission in, for example, the NB-PUCCH and/or NB-PUSCH.

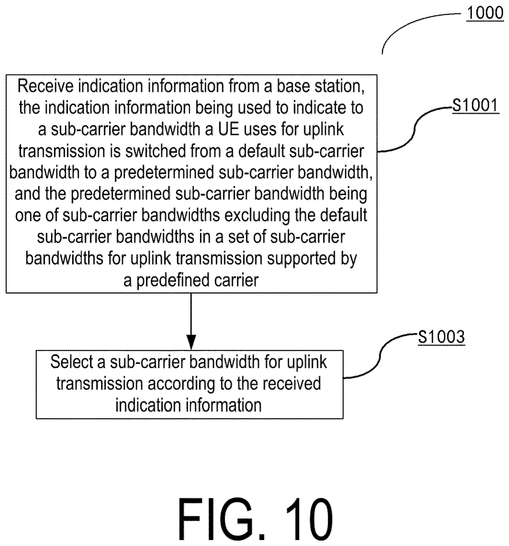

FIG. 10 schematically shows a flowchart of a method of selecting a subcarrier bandwidth for uplink transmission executed by a UE according to the fifth embodiment of the present invention. As shown in FIG. 10, a method 1000 comprises the following steps.

Step S1001: Indication information is received from a base station, the indication information being used to indicate to a subcarrier bandwidth a UE uses for uplink transmission is switched from a default subcarrier bandwidth to a predetermined subcarrier bandwidth, and the predetermined subcarrier bandwidth being one of subcarrier bandwidths excluding the default subcarrier bandwidths in a set of subcarrier bandwidths for uplink transmission available for a predefined carrier.

The indication information is carried by an RRC message or included in DCI carried by an NB-PDCCH.
■ In an implementation, if the default transmission in the NB-PUSCH and/or NB-PUCCH is the single-tone 3.75 kHz, then the first indication information is a bit string used to indicate the transmission type the UE uses in the NB-PUSCH and/or NB-PUCCH is switched from the default single-tone 3.75 kHz to the single-tone 15 kHz.
■ In another implementation, if the default transmission in the NB-PUSCH and/or NB-PUCCH is the single-tone 15 kHz, then the first indication information is a bit string used to indicate the transmission type the UE uses in the NB-PUSCH and/or NB-PUCCH is switched from the default single-tone 15 kHz to the single-tone 3.75 kHz.
■ In another implementation, if the default transmission in the NB-PUSCH and/or NB-PUCCH is the single-tone 3.75 kHz and/or single-tone 15 kHz, then the first indication information is a bit string used to indicate the transmission type the UE uses in the NB-PUSCH and/or NB-PUCCH is switched from the default single-tone 3.75 kHz and/or single-tone 15 kHz to the multi-tone 15 kHz.
■ In another implementation, if the default transmission in the NB-PUSCH and/or NB-PUCCH is the multi-tone 15 kHz, then the first indication information is a bit string used to indicate the transmission type the UE uses in the NB-PUSCH and/or NB-PUCCH is switched from the default multi-tone 15 kHz to the single-tone 3.75 kHz and/or single-tone 15 kHz.

Step S1003: The UE selects a subcarrier bandwidth for uplink transmission according to the received indication information.

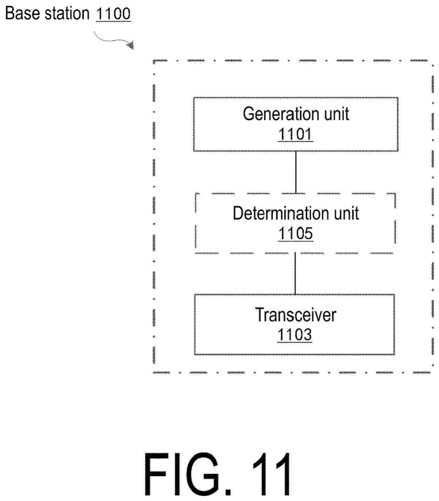

FIG. 11 schematically shows a structural block diagram of a base station according to an embodiment of the present invention. It can be understood that only the base station structure related to the present invention is shown here to avoid confusion.

As shown in FIG. 11, a base station 1100 includes a generation unit 1101 and a transceiver 1103.

The base station 1100 may perform the method 100 according to the first embodiment of the present invention as shown in FIG. 1.

Specifically, the generation unit 1101 generates indication information, the indication information being used to indicate a subcarrier bandwidth for single-tone transmission in a first NB-PUSCH after NB-PRACH transmission and/or in a second NB-PUSCH after NB-PRACH transmission.

The indication information is carried by an NB-RAR message. The indication information includes a bit string, and different values of the bit string are used to indicate different subcarrier bandwidths for the single-tone transmission.

The transceiver 1103 sends to a UE the generated indication information to indicate to the UE a subcarrier bandwidth for the single-tone transmission.

The base station 1100 may perform the method 300 according to the second embodiment of the present invention as shown in FIG. 3.

In the second embodiment, the base station 1100 further includes a determination unit 1105.

Specifically, the generation unit 1101 may generate first indication information, the first indication information being used to indicate a first set of subcarrier bandwidths for uplink transmission available for a carrier; generate second indication information when the determination unit determines that the first set of subcarrier bandwidths comprises a plurality of subcarrier bandwidth types, the second indication information being used to indicate a second set of subcarrier bandwidths for uplink transmission available for a user equipment (UE), and the second set being a subset or a full set of the first set; and generate third indication information when the determination unit further determines that the second set of subcarrier bandwidths comprising a plurality of subcarrier bandwidth types, the third indication information being used to indicate a subcarrier bandwidth the UE uses for uplink transmission, and the subcarrier bandwidth being one of the subcarrier bandwidths in the second set.

The determination unit 1105 may determine whether the first set of subcarrier bandwidths comprises a plurality of subcarrier bandwidth type; and may determine whether the second set of subcarrier bandwidths comprises a plurality of subcarrier bandwidth types.

The transceiver 1103 may send to the UE the generated first indication information, and optionally the second indication information and the third indication information.

The base station 1100 may perform the method 500 according to the third embodiment of the present invention as shown in FIG. 5.

In the third embodiment, the base station 1100 also includes a determination unit 1105.

Specifically, the generation unit 1101 may generate first indication information, the first indication information being used to indicate a first set of subcarrier bandwidths for uplink transmission available for a user equipment (UE), the first set being a subset or a full set of a set of subcarrier bandwidths for uplink transmission available for a predefined carrier; and generate second indication information when the determination unit determines that the first set of subcarrier bandwidths comprises a plurality of subcarrier bandwidth types, the second indication information being used to indicate a subcarrier bandwidth the UE uses for uplink transmission, and the subcarrier bandwidth being one of the subcarrier bandwidths in the first set.

The determination unit 1105 may whether the first set of subcarrier bandwidths comprises a plurality of subcarrier bandwidth types.

The transceiver 1103 may send to the UE the generated first indication information, and optionally the second indication information.

The base station 1100 may perform the method 700 according to the fourth embodiment of the present invention as shown in FIG. 7.

In the fourth embodiment, the base station 1100 also includes a determination unit 1105.

Specifically, the generation unit 1101 may generate first indication information, the first indication information being used to indicate a first set of subcarrier bandwidths for uplink transmission available for a carrier; and generate second indication information when the determination unit determines that the first set of subcarrier bandwidths comprises a plurality of subcarrier bandwidth types, the second indication information being used to indicate a subcarrier bandwidth a user equipment (UE) uses for uplink transmission is switched from a default subcarrier bandwidth to a predetermined subcarrier bandwidth, and the predetermined subcarrier bandwidth being one of the subcarrier bandwidths excluding the default subcarrier bandwidth in the first set.

The determination unit 1105 may whether the first set of subcarrier bandwidths comprises a plurality of subcarrier bandwidth types.

The transceiver 1103 may send to the UE at least the generated first indication information.

The base station 1100 may perform the method 900 according to the fifth embodiment of the present invention as shown in FIG. 9.

Specifically, the generation unit 1101 may generate indication information, the indication information being used to indicate to a subcarrier bandwidth a UE uses for uplink transmission is switched from a default subcarrier bandwidth to a predetermined subcarrier bandwidth, and the predetermined subcarrier bandwidth being one of subcarrier bandwidths excluding the default subcarrier bandwidths in a set of subcarrier bandwidths for uplink transmission available for a predefined carrier. The indication information may be carried by an RRC message or included in DCI carried by an NB-PDCCH.

The transceiver 1103 may send the generated indication information to the UE.

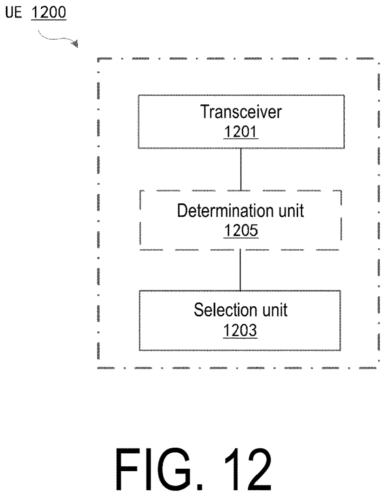

FIG. 12 schematically shows a structural block diagram of a UE according to an embodiment of the present invention. It can be understood that only the base station structure related to the present invention is shown here to avoid confusion.

As shown in FIG. 12, a UE 1200 includes a transceiver 1201 and a selection unit 1203. The UE 1200 performs the method 200 according to the first embodiment of the present invention as shown in FIG. 2.

Specifically, the transceiver 1201 receives indication information from a base station, the indication information being used to indicate a subcarrier bandwidth for single-tone transmission in a first NB-PUSCH after NB-PRACH transmission and/or in a second NB-PUSCH after NB-PRACH transmission.

The indication information is carried by an NB-RAR message. The indication information includes a bit string, and different values of the bit string are used to indicate different subcarrier bandwidths for the single-tone transmission.

The selection unit 1203 selects a subcarrier bandwidth for the single-tone transmission according to the received indication information.

The UE 1200 may perform the method 400 according to the second embodiment of the present invention as shown in FIG. 4. In the second embodiment, the UE 1200 further includes a determination unit 1205.

Specifically, the transceiver 1201 may receive first indication information from a base station, the first indication information being used to indicate a first set of subcarrier bandwidths for uplink transmission available for a carrier. The first indication information may be carried by one of the following: an NB-SSS sequence; an MIB; an SIB-1 or SIB-2; or an NB-RAR message.

The determination unit 1205 may determine whether second indication information is received from the base station, the second indication information being used to indicate a second set of subcarrier bandwidths for uplink transmission available for the UE, and the second set being a subset or a full set of the first set.

If the determination unit 1205 determines that the second indication information is not received from the base station and the first set of subcarrier bandwidths includes one type of subcarrier bandwidth, the selection unit 1203 may instruct the UE, according to the first indication information, to select that only type of subcarrier bandwidth for uplink transmission.

If the determination unit 1205 determines that the second indication information is received from the base station, then it is further determined in step S405 whether third indication information is received from the base station; the third indication information is included in DCI carried by an NB-PDCCH and being used to indicate a subcarrier bandwidth the UE uses for uplink transmission, and the subcarrier bandwidth being one of the subcarrier bandwidths in the second set.

If the determination unit 1205 determines that the third indication information is received from the base station, the selection unit 1203 may select a subcarrier bandwidth for uplink transmission according to the third indication information.

If the determination unit 1205 determines that the third indication information is not received from the base station and the first set of subcarrier bandwidths includes a plurality of subcarrier bandwidth types and the second set of subcarrier bandwidths includes one type of subcarrier bandwidth, then the selection unit 1203 may instruct the UE, according to the second indication information, to select that type of subcarrier bandwidth for uplink transmission.

The second indication information may include a bit string indicating the second set of subcarrier bandwidths for uplink transmission available for the UE.

The third indication information may include a bit string indicating a subcarrier bandwidth the UE uses for uplink transmission.

The UE 1200 may perform the method 600 according to the third embodiment of the present invention as shown in FIG. 6. In the third embodiment, the UE 1200 also includes a determination unit 1205.

The transceiver 1201 may receive first indication information from a base station, the first indication information being used to indicate a first set of subcarrier bandwidths for uplink transmission available for the UE, and the first set being a subset or a full set of a set of subcarrier bandwidths for uplink transmission available for a predefined carrier.

The determination unit 1205 may determine whether second indication information is received from the base station, the second indication information being used to indicate a subcarrier bandwidth the UE uses for uplink transmission, and the subcarrier bandwidth being one of the subcarrier bandwidths in the first set.

When the determination unit 1205 determines that the second indication information is received from the base station, the selection unit 1203 may select a subcarrier bandwidth for uplink transmission according to at least the second indication information.

When the determination unit 1205 determines that the second indication information is not received from the base station and the first set of subcarrier bandwidths includes one type of subcarrier bandwidth, the selection unit 1203 may select that only type of subcarrier bandwidth for uplink transmission according to the first indication information.

The UE 1200 may perform the method 1000 according to the fifth embodiment of the present invention as shown in FIG. 10.

Specifically, the transceiver 1201 may receive indication information from a base station, the indication information being used to indicate to a subcarrier bandwidth a UE uses for uplink transmission is switched from a default subcarrier bandwidth to a predetermined subcarrier bandwidth, and the predetermined subcarrier bandwidth being one of subcarrier bandwidths excluding the default subcarrier bandwidths in a set of subcarrier bandwidths for uplink transmission available for a predefined carrier.

The selection unit 1203 may select a subcarrier bandwidth for uplink transmission according to the received indication information.

The methods and related equipment according to the present invention have been described above in conjunction with preferred embodiments. It should be understood by those skilled in the art that the methods shown above are only exemplary. The method of the present invention is not limited to steps or sequences illustrated above. The network node and the user equipment illustrated above may comprise more modules; for example, they may further comprise modules which can be developed or developed in the future to be applied to modules of a base station, an MME, or a UE. Various identifiers shown above are only exemplary, and are not meant for limiting the present invention. The present invention is not limited to specific information elements serving as examples of these identifiers. A person skilled in the art can make various alterations and modifications according to the teachings of the illustrated embodiments.

It should be understood that the above embodiments of the present invention may be implemented through software, hardware or a combination of software and hardware. For example, various components of the base station and user equipment in the above embodiments can be realized through multiple devices, and these devices include, but are not limited to: an analog circuit device, a digital circuit device, a digital signal processing (DSP) circuit, a programmable processor, an application specific integrated circuit (ASIC), a field programmable gate array (FPGA), and a complex programmable logic device (CPLD), and the like.

In this application, the "base station" refers to a mobile communication data and control switching center with large transmission power and wide coverage area, including resource allocation scheduling, data receiving, and transmitting functions. The term "user equipment" refers to a user mobile terminal, such as a terminal device that can perform wireless communication with a base station or a micro base station, including a mobile phone, a notebook, or the like.

In addition, the embodiments of the present invention, disclosed here, may be implemented on a computer program product. More specifically, the computer program product is a product described as below. The product has a computer-readable medium on which a computer program logic is encoded. The computer program logic provides relevant operations to implement the above-described technical solution of the present invention when the product is executed on a computing equipment. The computer program logic enables a processor to execute the operations (methods) described in the embodiments of the present invention when the product is executed on at least one processor of a computing system. Such an arrangement of the present invention is typically provided as software, a code, and/or other data structures that are configured or encoded on a computer-readable medium, such as a light medium (e.g., a CD-ROM), a floppy disk or a hard disk, or, for example, firmware or other media of microcodes on one or more ROM or RAM or PROM chips, or downloadable software images, shared database and so on in one or more modules. Software or firmware or such configuration may be installed on a computing equipment such that one or more processors in the computing equipment perform the technical solutions described in the embodiments of the present invention.

In addition, each functional module or each feature of the base station equipment and the terminal equipment used in each of the above embodiments may be implemented or executed by a circuit, which is usually one or more integrated circuits. Circuits designed to perform various functions described in this description may include general purpose processors, digital signal processors (DSPs), application specific integrated circuits (ASICs) or general purpose integrated circuits, field programmable gate arrays (FPGAs) or other programmable logic devices, discrete gates or transistor logic, or discrete hardware components, or any combination of the above. The general-purpose processor may be a microprocessor; or the processor may be an existing processor, a controller, a microcontroller, or a state machine. The above-mentioned general-purpose processor or each circuit may be configured with a digital circuit or may be configured with a logic circuit. In addition, when an advanced technology that can replace current integrated circuits emerge due to advances in semiconductor technology, the present invention may also use integrated circuits obtained using this advanced technology.

Although the present invention has been shown in connection with the preferred embodiments of the present invention, it will be understood by those skilled in the art that various modifications, substitutions and alterations may be made to the present invention without departing from the scope of the present invention. Accordingly, the present invention should not be defined by the above-described embodiments, but should be defined by the appended claims.

## Claims

1. A User Equipment, UE (1200), comprising:
a transceiver (1201) configured to receive, from a base station (1100), a random access response, RAR, message including indication information, the indication information being used to indicate a subcarrier spacing for a first Narrowband physical uplink shared channel, PUSCH, transmission performed after transmission of a Narrowband physical random access channel and a second Narrowband PUSCH transmission performed after the transmission of the Narrowband physical random access channel; and
a selection unit (1203) configured to select the subcarrier spacing for the first Narrowband PUSCH transmission and the second Narrowband PUSCH transmission according to the indication information.

2. A method performed by a User Equipment, UE (1200), comprising:
receiving, from a base station (1100), a random access response, RAR, message including indication information, the indication information being used to indicate a subcarrier spacing for a first Narrowband physical uplink shared channel, PUSCH, transmission performed after transmission of a Narrowband physical random access channel and a second Narrowband PUSCH transmission performed after the transmission of the Narrowband physical random access channel; and
selecting the subcarrier spacing for the first Narrowband PUSCH transmission and the second Narrowband PUSCH transmission according to the indication information.

3. A base station (1100), comprising:
a generation unit (1101) configured to generate a random access response, RAR, message including indication information, the indication information being used to indicate a subcarrier spacing for a first Narrowband physical uplink shared channel, PUSCH, transmission performed after transmission of a Narrowband physical random access channel and a second Narrowband PUSCH transmission performed after the transmission of the Narrowband physical random access channel; and
a transceiver (1103) configured to transmit the RAR message to a User Equipment, UE (1200).

## Patentansprüche

1. Nutzerendgerät, UE (1200), aufweisend:
einen Transceiver (1201), der konfiguriert ist, um von einer Basisstation (1100) eine Direktzugriffsantwort-, RAR-, Nachricht zu empfangen, die eine Anzeigeinformation enthält, wobei die Anzeigeinformation verwendet wird, um einen Unterträger-Abstand für eine Übertragung eines ersten schmalbandigen, gemeinsam genutzten physikalischen Uplink-Kanals, PUSCH, die nach einer Übertragung eines schmalbandigen physikalischen Direktzugriffskanals durchgeführt wird, und eine Übertragung eines zweiten schmalbandigen PUSCH, die nach der Übertragung des schmalbandigen physikalischen Direktzugriffskanals durchgeführt wird, anzuzeigen; und
eine Auswahleinheit (1203), die konfiguriert ist, um den Unterträger-Abstand für die Übertragung des ersten schmalbandigen PUSCH und die Übertragung des zweiten schmalbandigen PUSCH gemäß der Anzeigeinformation auszuwählen.

2. Verfahren, das von einem Nutzerendgerät, UE (1200), durchgeführt wird, aufweisend:
Empfangen, von einer Basisstation (1100), einer Direktzugriffsantwort-, RAR-, Nachricht, die eine Anzeigeinformation enthält, wobei die Anzeigeinformation verwendet wird, um einen Unterträger-Abstand für eine Übertragung eines ersten schmalbandigen, gemeinsam genutzten physikalischen Uplink-Kanals, PUSCH, die nach einer Übertragung eines schmalbandigen physikalischen Direktzugriffskanals durchgeführt wird, und eine Übertragung eines zweiten schmalbandigen PUSCH, die nach der Übertragung des schmalbandigen physikalischen Direktzugriffskanals durchgeführt wird, anzuzeigen; und
Auswählen des Unterträger-Abstands für die Übertragung des ersten schmalbandigen PUSCH und die Übertragung des zweiten schmalbandigen PUSCH gemäß der Anzeigeinformation.

3. Basisstation (1100), aufweisend:
eine Erzeugungseinheit (1101), die konfiguriert ist, um eine Direktzugriffsantwort-, RAR-, Nachricht zu erzeugen, die eine Anzeigeinformation enthält, wobei die Anzeigeinformation verwendet wird, um einen Unterträger-Abstand für eine Übertragung eines ersten schmalbandigen, gemeinsam genutzten physikalischen Uplink-Kanals, PUSCH, die nach einer Übertragung eines schmalbandigen physikalischen Direktzugriffskanals durchgeführt wird, und eine Übertragung eines zweiten schmalbandigen PUSCH, die nach der Übertragung des schmalbandigen physikalischen Direktzugriffskanals durchgeführt wird, anzuzeigen; und
einen Transceiver (1103), der konfiguriert ist, um die RAR-Nachricht zu einem Nutzerendgerät, UE (1200), zu übertragen.

## Revendications

1. Equipement utilisateur, UE (1200), comprenant :
un émetteur-récepteur (1201) configuré pour recevoir, en provenance d'une station de base (1100), un message de réponse d'accès aléatoire, RAR, comprenant des informations d'indication, les informations d'indication étant utilisées pour indiquer un espacement de sous-porteuse pour une première transmission de canal physique partagé de liaison montante, PUSCH, à bande étroite réalisée après une transmission d'un canal physique d'accès aléatoire à bande étroite et une seconde transmission de PUSCH à bande étroite réalisée après la transmission du canal physique d'accès aléatoire à bande étroite ; et
une unité de sélection (1203) configurée pour sélectionner l'espacement de sous-porteuse pour la première transmission de PUSCH à bande étroite et la seconde transmission de PUSCH à bande étroite en fonction des informations d'indication.

2. Procédé réalisé par un équipement utilisateur, UE (1200), comprenant :
la réception, en provenance d'une station de base (1100), d'un message de réponse d'accès aléatoire, RAR, comprenant des informations d'indication, les informations d'indication étant utilisées pour indiquer un espacement de sous-porteuse pour une première transmission de canal physique partagé de liaison montante, PUSCH, à bande étroite réalisée après une transmission d'un canal physique d'accès aléatoire à bande étroite et une seconde transmission de PUSCH à bande étroite réalisée après la transmission du canal physique d'accès aléatoire à bande étroite ; et
la sélection de l'espacement de sous-porteuse pour la première transmission de PUSCH à bande étroite et la seconde transmission de PUSCH à bande étroite en fonction des informations d'indication.

3. Station de base (1100) comprenant :
une unité de génération (1101) configurée pour générer un message de réponse d'accès aléatoire, RAR, comprenant des informations d'indication, les informations d'indication étant utilisées pour indiquer un espacement de sous-porteuse pour une première transmission de canal physique partagé de liaison montante, PUSCH, à bande étroite réalisée après une transmission d'un canal physique d'accès aléatoire à bande étroite et une seconde transmission de PUSCH à bande étroite réalisée après la transmission du canal physique d'accès aléatoire à bande étroite ; et
un émetteur-récepteur (1103) configuré pour transmettre le message RAR à un équipement utilisateur, UE (1200) .
